# EUROPÄISCHE PATENTSCHRIFT

(11) **EP 1 892 414 B1**
(45) Veröffentlichungstag und Bekanntmachung des Hinweises auf die Patenterteilung: **21.10.2009**
(21) Anmeldenummer: 06015242.8
(22) Anmeldetag: 21.07.2006
(51) Int. Cl.: F04B 43/00, F16J 3/02, F16K 7/12, F04B 43/02, F04B 45/04, F01B 19/02

(54) **Verbundmembran**
Composite membrane
Membrane composite

(43) Veröffentlichungstag der Anmeldung: 27.02.2008
(73) Patentinhaber: ULMAN Dichtungstechnik GmbH, 71069 Sindelfingen (DE)
(72) Erfinder: Radom, Leon, 74248 Ellhofen (DE); Öhrle, Joachim, 71083 Herrenberg (DE)
(74) Vertreter: Albrecht, Rainer Harald

(56) Entgegenhaltungen:
- EP-A- 1 406 034
- EP-A1- 1 518 656
- DE-A1- 10 227 192
- FR-A1- 2 766 524
- US-A- 5 217 797

## Beschreibung

Die Erfindung betrifft eine Verbundmembran, mit einem Elastomerkörper und einer auf den Elastomerkörper aufgetragenen Auflageschicht aus Polytetrafluorethylen (PTFE), wobei zusätzlich eine als Permeationsbarriere ausgebildete Sperrschicht vorgesehen ist, die zwischen der Auflageschicht und dem Elastomerkörper angeordnet oder auf die dem Elastomerkörper abgewandte Seite der Auflageschicht aufgetragen ist.

Eine Verbundmembran des eingangs beschriebenen Aufbaus ist Gegenstand der US 5 217 797. Der Gegenstand des Patentanspruchs 1 ist in zweiteiliger Fassung gegenüber der Offenbarung dieser Druckschrift abgegrenzt. Die dort vorgesehene Sperrschicht ist aus einem flexiblen Polymer ausgeführt, welches mit einem Gewebe ausgerüstet ist.

Darüber hinaus kennt man Verbundmembranen durch die DE 102 27 192 A1. Der Elastomerkörper ist hier mit der produktseitigen PTFE-Schicht chemisch verbunden. Bei speziellen Anwendungen, wie beispielsweise bei Pumpen von Lösungsmitteln, kann es zur Ablösung der PTFE-Auflageschicht vom Elastomerkörper kommen. Auch wird in diesen Fällen häufig beobachtet, dass der Elastomerkörper durch die Lösungsmittel trotz der PTFE-Auflageschicht chemisch angegriffen wird.

Grundsätzlich kann die Verbundmembran beispielsweise in eine Membranpumpe eingebaut werden. Hierbei wird die Membran randseitig eingespannt, während der innere Bereich der Verbundmembran Hubbewegungen ausführt. Mit jeder Hubbewegung wird ein biegsamer Membranabschnitt umgestülpt, wobei in einem radialen Schnitt Abrollbewegungen des biegsamen Materials beobachtet werden. Alternativ kann die Membran aber auch beispielsweise als Ventilmembran eingesetzt werden. Grundsätzlich ist die im Folgenden beschriebene erfindungsgemäße Verbundmembran jedoch für die verschiedensten Zwecke einsetzbar.

Der Erfindung liegt das technische Problem zugrunde, die Standzeit einer eingangs beschriebenen Verbundmembran zu erhöhen.

Zur Lösung dieser technischen Problemstellung ist eine gattungsgemäße Verbundmembran dadurch gekennzeichnet, dass zwischen der Sperrschicht und dem Elastomerkörper zumindest eine PTFE enthaltene Zwischenschicht angeordnet ist.

Allgemein verhindert die Sperrschicht wirksam eine Permeation des die Membran beaufschlagenden Mediums hin zum Elastomerkörper. Ferner wird auch die Kontaktfläche zwischen Sperrschicht bzw. Auflageschicht und Elastomerkörper aufgrund der Permeationsbarrierewirkung der Sperrschicht nicht mit Medium beaufschlagt, so dass keine Gefahr einer Ablösung der Sperrschicht bzw. Auflageschicht vom Elastomerkörper besteht.

Nach vorteilhafter Ausführungsform besteht die Zwischenschicht aus PTFE. Die Sperrschicht kann ein Perfluoralkoxy-Copolymer (PFA) enthalten bzw. besteht vorzugsweise aus PFA. Fertige Folien mit dem Aufbau PTFE-PFA-PTFE sind beispielsweise im Handel erhältlich und kostengünstig einsetzbar.

Der Elastomerkörper kann tellerförmig, insbesondere als kreisförmiger Teller ausgebildet sein, der eine Tellerwand mit einer Einspannfläche, einen Boden und einen den Tellerrand mit dem Boden verbindenden biegsamen Membranabschnitt aufweist. Der Boden des Elastomerkörpers kann einen einvulkanisierten Kern mit einer Anschlusseinrichtung für eine Kolbenstange oder alternativ eine mittige Öffnung zum Anschluss an eine Kolbenstange aufweisen. Der Elastomerkörper enthält vorzugsweise eine textile Verstärkungseinlage, kann jedoch auch ohne eine derartige Verstärkung ausgebildet sein. Ferner kann der Elastomerkörper auf seiner elastomeren Rückseite im Übergangsbereich zwischen dem Tellerrand und dem biegsamen Membranabschnitt eine ringförmig umlaufende Vertiefung enthalten.

Im Folgenden wird die Erfindung anhand einer lediglich ein Ausführungsbeispiel darstellenden Zeichnung ausführlich erläutert. Es zeigen schematisch:
- Fig. 1: einen radialen Querschnitt durch eine erfindungsgemäße Verbundmembran,
- Fig. 2: eine Draufsicht auf die in Fig. 1 dargestellte Verbundmembran,
- Fig. 3: eine Unteransicht der in Fig. 1 dargestellten Verbundmembran,
- Fig. 4: eine alternative Ausführungsform der Erfindung in einer der Fig. 1 entsprechenden Darstellung.
- Fig. 5: eine ausschnittsweise Darstellung einer weiteren Ausführungsform der Erfindung.

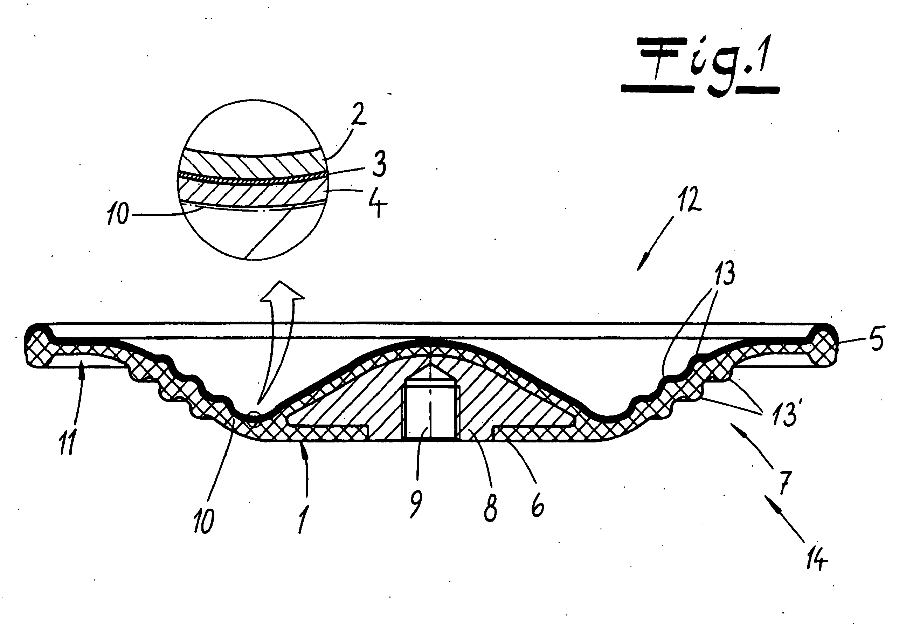

In Fig. 1 ist eine Verbundmembran für Membranpumpen mit einem tellerförmigen Elastomerkörper 1 und einer produktseitigen Auflageschicht 2 aus PTFE dargestellt. Insbesondere der ausschnittsweisen Vergrößerung ist zu entnehmen, dass zwischen der Auflageschicht 2 und dem Elastomerkörper 1 eine als Permeationsbarriere dienende Sperrschicht 3 angeordnet ist. Ferner ist zwischen Sperrschicht 3 und Elastomerkörper 1 eine Zwischenschicht 4 vorgesehen. Die Zwischenschicht 4 besteht genauso wie die produktseitige Auflageschicht 2 aus PTFE, während die Sperrschicht 3 aus PFA besteht.

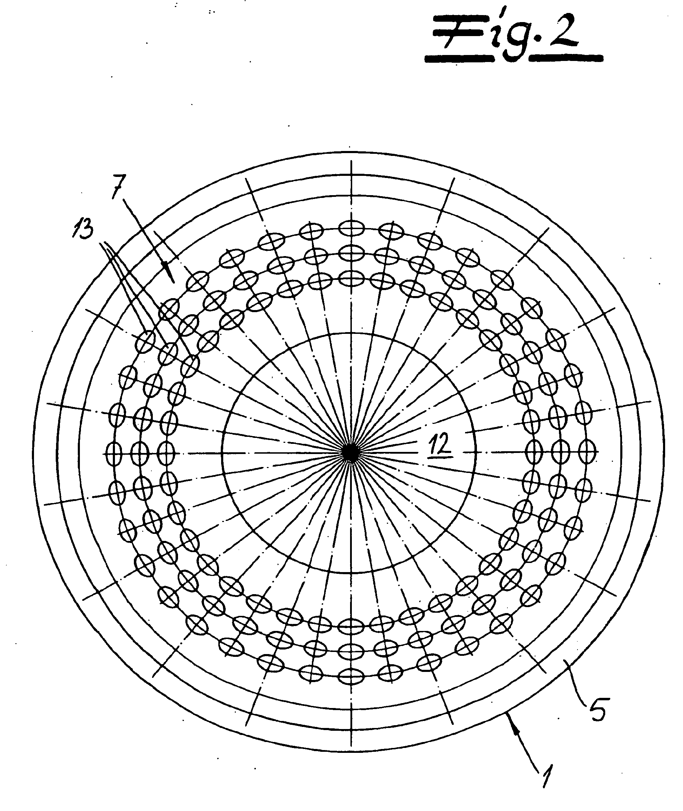

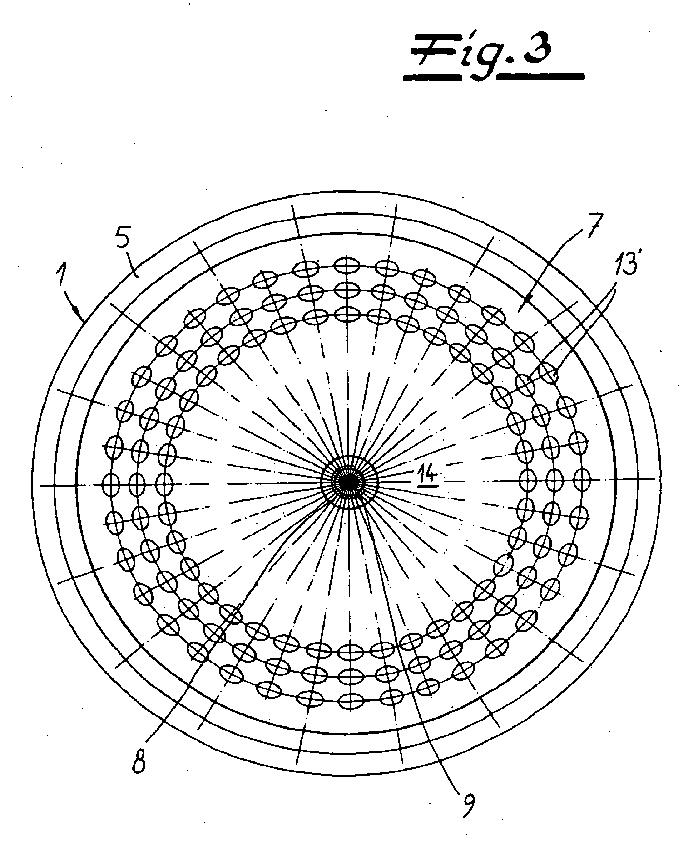

Der Fig. 1 ist ferner zu entnehmen, dass der Elastomerkörper 1 als kreisförmiger Teller ausgebildet ist, der einen Tellerrand 5 mit einer Einspannfläche, einen Boden 6 und einen den Tellerrand 5 mit dem Boden 6 verbindenden biegsamen Membranabschnitt 7 aufweist. In Fig. 1 enthält der Boden 6 des Elastomerkörpers 1 einen einvulkanisierten Kern 8 mit einer Anschlusseinrichtung 9 für eine Kolbenstange. Der Elastomerkörper 1 selbst enthält eine textile Verstärkungseinlage 10 und weist auf seiner elastomeren Rückseite im Übergangsbereich zwischen dem Tellerrand 5 und dem biegsamen Membranabschnitt 7 eine ringförmig umlaufende Vertiefung 11 auf. Einer gemeinsamen Betrachtung der Fig. 1 bis 3 ist zu entnehmen, dass der biegsame Membranabschnitt 7 an seiner dem Produkt zugewandten Oberseite 12 eine Vielzahl von Noppen 13 aufweist, die Erhebungen in der PTFE-Auflage 2 bilden. Die Noppen 13 sind als Kalotten mit einer vorzugsweise kreisförmigen Grundfläche ausgebildet. Ferner weist der biegsame Membranabschnitt 7 auch eine Vielzahl von Noppen 13' auf, die Erhebungen an der Elastomerrückseite 14 des Elastomerkörpers 1 bilden. Auch diese Noppen 13' sind als Kalotten mit einer vorzugsweise kreisförmigen Grundfläche ausgebildet.

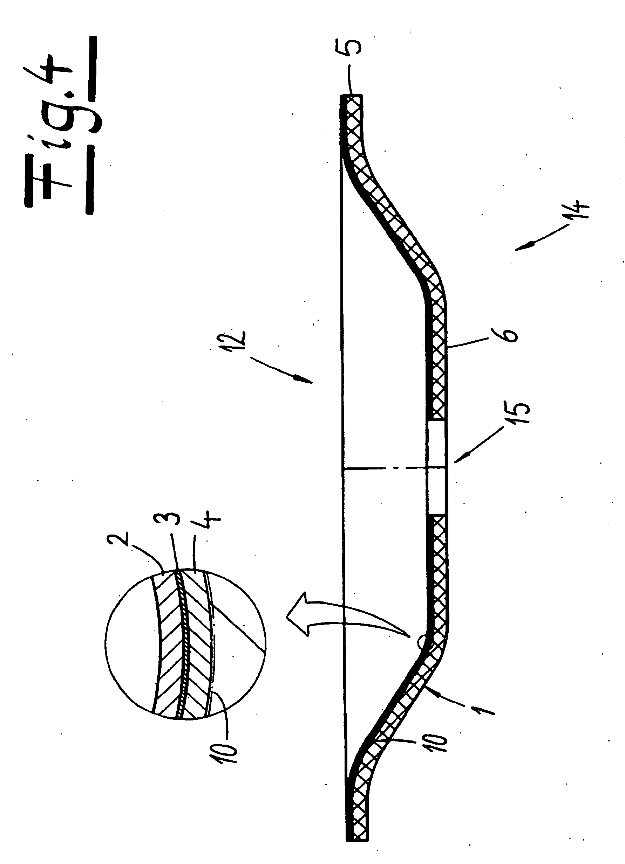

Die Fig. 4 zeigt eine alternative Ausführungsform der Erfindung, bei der der Boden 6 des Elastomerkörpers 1 eine mittige Öffnung 15 zum Anschluss an eine Kolbenstange aufweist.

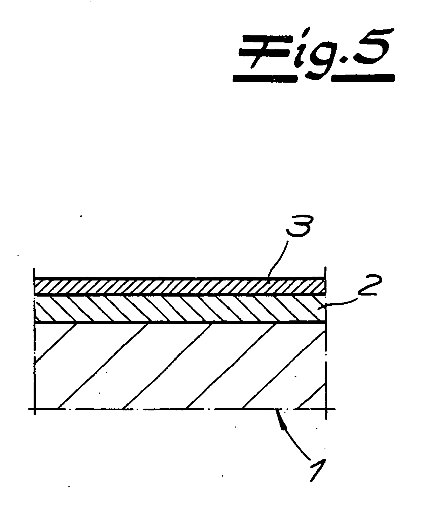

Gemäß einer weiteren, in Fig. 5 dargestellten, alternativen Ausführungsform der Erfindung ist die aus PFA bestehende Sperrschicht (3) auf die dem Elastomerkörper (1) abgewandte Seite der PTFE-Auflageschicht (2) aufgetragen.

## Patentansprüche

1. Verbundmembran, mit einem Elastomerkörper (1) und einer auf den Elastomerkörper (1) aufgetragenen Auflageschicht (2) aus Polytetrafluorethylen (PTFE), wobei zusätzlich eine als Permeationsbarriere ausgebildete Sperrschicht (3) vorgesehen ist, die zwischen der Auflageschicht (2) und dem Ealstomerkörper (1) angeordnet oder auf die dem Elastomerkörper (19 abgewandte Seite der Auflageschicht (2) aufgetragen ist, **dadurch gekennzeichnet, dass** zwischen Sperrschicht (3) und Elastomerkörper (1) zumindest eine PTFE enthaltene Zwischenschicht (4) angeordnet ist.

2. Verbundmembran nach Anspruch 1, **dadurch gekennzeichnet, dass** die Zwischenschicht (4) aus PTFE besteht.

3. Verbundmembran nach Anspruch 1 oder 2, **dadurch gekennzeichnet, dass** die Sperrschicht (3) ein Perfluoralkoxy-Copolymer (PFA) enthält.

4. Verbundmembran nach Anspruch 3, **dadurch gekennzeichnet, dass** die Sperrschicht (3) aus PFA besteht.

5. Verbundmembran nach einem der Ansprüche 1 bis 4, **dadurch gekennzeichnet, dass** der Elastomerkörper (1) tellerförmig ausgebildet ist.

6. Verbundmembran nach Anspruch 5, **dadurch gekennzeichnet, dass** der Elastomerkörper (1) als kreisförmiger Teller ausgebildet ist, der einen Tellerrand (5) mit einer Einspannfläche, einen Boden (6) und einen den Tellerrand (5) mit dem Boden (6) verbindenden biegsamen Membranabschnitt (7) aufweist.

7. Verbundmembran nach Anspruch 6, **dadurch gekennzeichnet, dass** der Boden (6) des Elastomerkörpers (1) einen einvulkanisierten Kern (8) mit einer Anschlusseinrichtung (9) für eine Kolbenstange enthält oder eine mittige Öffnung (15) zum Anschluss an eine Kolbenstange aufweist.

8. Verbundmembran nach einem der Ansprüche 1 bis 7, **dadurch gekennzeichnet, dass** der Elastomerkörper (1) eine textile Verstärkungseinlage (10) enthält.

## Claims

1. A composite diaphragm having an elastomer body (1) and an application layer (2) of polytetrafluoroethylene (PTFE) applied to the elastomer body (1), whereby a barrier layer (3), also designed as a permeation barrier, is additionally provided, arranged between the application layer (2) and the elastomer body (1) or applied to the side of the application layer (2) facing away from the elastomer body (1), **characterized in that** at least one intermediate layer (4) containing PTFE is arranged between the barrier layer (3) and the elastomer body (1).

2. The composite diaphragm according to claim 1, **characterized in that** the intermediate layer (4) is made of PTFE.

3. The composite diaphragm according to claim 1 or 2, **characterized in that** the barrier layer (3) is a perfluoroalkoxy copolymer (PFA).

4. The composite diaphragm according to claim 3, **characterized in that** the barrier layer (3) comprises PFA.

5. The composite diaphragm according to any one of claims 1 to 4, **characterized in that** the elastomer body (1) is designed in the form of a plate.

6. The composite diaphragm according to claim 5, **characterized in that** the elastomer body (1) is designed as a circular plate having a plate edge (5) with a clamping surface, a bottom (6) and a flexible diaphragm section (7) connecting the plate edge (5) to the bottom (6).

7. The composite diaphragm according to claim 6, **characterized in that** the bottom (6) of the elastomer body (1) comprises a core (8) which is vulcanized in place and has a connecting mechanism (9) for a piston rod or the bottom has a central opening (15) for connection to a piston rod.

8. The composite diaphragm according to any one of claims 1 to 7, **characterized in that** the elastomer body (1) contains a textile reinforcing insert (10).

## Revendications

1. Membrane composite, avec un corps en élastomère (1) et une couche support (2) en polytétrafluoréthylène (PTFE), une couche de barrage (3) conçue comme une barrière de perméation qui est disposée entre la couche support (2) et le corps en élastomère (1) ou qui est appliquée sur la face de la couche support (2) qui est opposée au corps en élastomère, (1) étant prévue, **caractérisée en ce qu'**entre la couche de barrage (3) et le corps en élastomère (1) est disposée au moins une couche intermédiaire (4) contenant du PTFE.

2. Membrane composite selon la revendication 1, **caractérisée en ce que** la couche intermédiaire (4) consiste en PTFE.

3. Membrane composite selon la revendication 1 ou 2, **caractérisée en ce que** la couche de barrage (3) contient un pefluoralcoxy copolymère (PFA).

4. Membrane composite selon la revendication 3, **caractérisée en ce que** la couche de barrage (3) consiste en PFA.

5. Membrane composite selon l'une quelconque des revendications 1 à 4, **caractérisée en ce que** le corps en élastomère (1) est conçu sous forme de soucoupe.

6. Membrane composite selon la revendication 5, **caractérisée en ce que** la corps en élastomère (1) est conçu sous la forme d'une soucoupe circulaire qui comporte un bord de soucoupe (5) avec une surface de serrage, un fond (6) et une surface de membrane (7) flexible reliant le bord de la soucoupe (5) avec le fond (6).

7. Membrane composite selon la revendication 6, **caractérisée en ce que** le fond (6) du corps en élastomère (1) comporte un noyau (8) vulcanisé avec un dispositif de raccord (8) pour une tige de piston ou un orifice central (15) pour le raccord sur une tige de piston.

8. Membrane composite selon l'une quelconque des revendications 1 à 7, **caractérisée en ce que** le corps en élastomère (1) contient un insert de renfort textile (10).
